# EUROPÄISCHE PATENTANMELDUNG

(11) **EP 3 819 078 A1**
(43) Veröffentlichungstag der Anmeldung: **12.05.2021**
(21) Anmeldenummer: 19208412.7
(22) Anmeldetag: 11.11.2019
(51) Int. Cl.: B23Q 11/08, B23B 31/00

(54) **WERKZEUGMASCHINE, INSBESONDERE DREHSCHLEIFMASCHINE**

(71) Anmelder: Wörmer, Alfons, 5500 Bischofshofen (AT); Huber, Martin, 5452 Pfarrwerfen (AT)
(72) Erfinder: Wörmer, Alfons, 5500 Bischofshofen (AT); Huber, Martin, 5452 Pfarrwerfen (AT)
(74) Vertreter: Baronetzky, Klaus

(57) **Zusammenfassung**

Die Erfindung betrifft eine Werkzeugmaschine, insbesondere Drehschleifmaschine, mit einer Werkzeugspindel, mit einer Spannzange und einem Spindelmotor, wobei die Spannzange mindestens zwei Spannbacken aufweist, die für die Aufnahme und für die Freigabe eines Werkzeugs betätigbar sind, und mit einem Luftkanal, der radial außerhalb der Spannzange verläuft wobei der Luftkanal als Speerluftkanal (42) ausgebildet ist und mindestens teilweise oberhalb der Spannbacken (26) einen Überdruckraum(44) bildet.

## Beschreibung

Die Erfindung betrifft eine Werkzeugmaschine, gemäß dem Oberbegriff von Anspruch 1, insbesondere eine Werkzeugmaschine mit Spindelmotor und sich von diesem nach oben erstreckender Werkzeugspindel, und besonders bevorzugt eine Drehschleifmaschine.

Werkzeugmaschinen, zu denen Drehschleifmaschinen gehören, sind in zahlreichen Ausprägungen bekannt geworden. Für bestimmte Anwendungen eignen sich besonders Maschinen vom Typ 5/0, also solche, bei denen Null Bewegungsachsen des Werkzeugs mit 5 Bewegungssachen des Werkstücks kombiniert werden.

Die Bewegungsachsen des Werkstücks werden typischerweise über einen Roboterarm bereitgestellt und stellen sich als 3 translatorische und 2 rotatorische Bewegungsachsen dar. Demgegenüber verbleibt das sich drehende Werkzeug stationär an einer Werkzeugspindel, die von einem Spindelmotor angetrieben wird und ortsfest realisiert ist.

Bei der Bearbeitung des Werkstücks durch das Werkzeug entstehen Späne, die je nach verwendeter Materialkombination von Werkstück und Werkzeug unterschiedlich ausfallen.

Beispielsweise entstehen bei der spanabhebenden Bearbeitung von PMMA Kunststoffchips.

Wenn beispielsweise keramische Dentalrestaurationen drehgeschliffen oder gefräst werden, entstehen neben körnigen auch nahezu staubförmige Ablagerungen.

Während die körnigen Ablagerungen aufgrund ihres Eigengewichtes nach unten sinken, liegen die staubförmigen Ablagerungen zunächst in Form einer Art Nebel vor, der nur langsam absinkt, aber bei Stillstand des Spindelmotors nach Abschluss des Bearbeitungsvorgangs eine Staubschicht am Boden der Drehschleifmaschine bildet.

Um die Verschmutzung des Fräsraums zu reduzieren, ist es bekannt geworden, über Luftdüsen, die besonders bevorzugt am oberen Rand des Werkraums angebracht sind, den Fräsraum zu reinigen.

Diesen diametral gegenüber liegt dann typischerweise eine Absaugöffnung, die für die Abfuhr der Ablagerungen sorgen soll.

Eine derartige Lösung ist beispielsweise aus der EP 3 012 065 A1 bekannt.

Daneben ist es bekannt geworden, den Bearbeitungsbereich, also den Bereich, an dem das Werkzeug das Werkstück bearbeitet, besonders zu reinigen. Hierzu ist es gemäß der EP 3 338 945 A1 bekannt geworden, Düsen an der Werkzeugspindel anzuordnen, durch die sowohl Wasser als auch Druckluft wahlweise dem Bearbeitungsbereich zuführbar ist, um diesen wichtigen Bereich nach Möglichkeit frei von Ablagerungen zu halten.

Drehschleifmaschinen weisen typischerweise ein vergleichsweise geringes erforderliches Drehmoment, aber für den entsprechenden erwünschten Bearbeitungsfortschritt eine hohe Umdrehungsgeschwindigkeit des Spindelmotors auf. Diese beträgt typischerweise 40.000 U/min, kann aber auch bis zu 80.000 U/m betragen.

Bei einer derart hohen Drehgeschwindigkeit ist es unabdingbar, dass die Lagerung hoch präzise realisiert ist. Es werden Kugellager mit einem Lagerspiel von etwa 500 nm verwendet, die auch bei derart hohen Geschwindigkeiten die erforderlichen Stützkräfte auffangen können.

Für die Abstützung der Spindel sind dann typischerweise 2 bis 4 Kugellager übereinander vorgesehen.

Bereits ein Staubkorn würde jedoch, wenn es in die Kugellaufbahn gerät, bei dieser hohen Geschwindigkeit verschleißend wirken.

Daher wird der Bereich der Lager von Lagerluft in einem Luftkanal durchströmt. Die Lagerluft wird durch hintereinander geschaltete Filter, also zunächst ein Grobfilter, dann ein Feinfilter, gereinigt und bildet im Grunde einen Zylinderspalt um die Werkzeugspindel.

Dieser Spalt endet etwas oberhalb des obersten Kugellagers. Wenn die Drehschleifmaschine abgeschaltet wird, lassen sich dort gegebenenfalls staubförmige Ablagerungen nieder.

Während des Betriebs strömt die Lagerluft als Sperrluft an den Spannzangen aus und soll dort Ablagerungen verhindern.

Vor dem Einschalten des Spindelmotors wird die Lagerluft und damit die Sperrluft eingeschaltet, so dass etwaige Ablagerungen dort ausgestoßen werden sollen.

Bei derart hohen Drehgeschwindigkeiten ist es ferner wichtig, dass das Werkzeug in der typischerweise verwendeten Spannzange konzentrisch, also frei von Abweichungen, gehalten wird. Hierzu sind selbstzentrierende Spannbacken bevorzugt, die an Schrägflächen gleiten und das Werkzeug durch einen axialen Federdruck einspannen. Für den Werkzeugwechsel wird über eine rückwärtige Druckplatte dafür gesorgt, das die Spannbacken nach vorne bewegt werden, so dass sie an den Schrägflächen radial nach außen geführt werden und das Werkzeug freigeben.

Die Druckluft für das Lösen der Spannzange liegt mit einem Druck zwischen 6 und 8 bar vor, wesentlich mehr also, als die Lagerluft, die beispielsweise einem Druck von 2 bar benötigt.

Um auch den Bereich der Spannbacken und damit der Spannzange frei von Ablagerungen zu halten, ist es vorgeschlagen geworden, einen kurzen Luftimpuls durch die Spannzange hindurch zuleiten, der dann für die Reinigung der dortigen Ablagerungen sorgen soll, wenn das Werkzeug gewechselt wird, damit das nächstfolgende Werkzeug sich wiederum automatisch zentrieren lässt.

Gerade bei länger stehenden Werkzeugmaschinen können jedoch die Ablagerungen auch festbacken, so dass sie sich durch den Druckluftimpuls nicht oder nicht vollständig lösen lassen.

Dies führt zu einer Exzentrizität und zu einer starken Belastung des Spindellagers, einem erhöhten Werkzeugverschleiß bzw. einer weniger genauen Herstellung des Werkstücks.

Ein entsprechendes Werkstück kann beispielsweise ein keramisches Dentalrestaurationsteil sein, bei dem es bekanntlich auf eine besonders gute Genauigkeit ankommt.

Demgegenüber liegt der Erfindung die Aufgabe zugrunde, eine Werkzeugmaschine gemäß dem Oberbegriff von Anspruch 1 zu schaffen, die insbesondere für die Herstellung von Dentalrestaurationsteilen geeignet ist und auch langfristig gute Genauigkeitsergebnise erzielt.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, die Sperrluft so strömen zu lassen, dass sie auch den Zutritt von Ablagerungen zur Spannzange blockiert.

Hierzu wird zweckmäßig kurzerhand oberhalb der Spannzange ein Überdruckraum geschaffen.

Diese wird von Sperrluft gespeist und endet in einem oberhalb befindlichen Ringspalt, wo die Sperrluft ausbläst und damit von vornherein verhindert, dass Ablagerungen in die Spannzange eintreten können.

Besonders günstig ist es, dass die Sperrluft für die Spannzange mit der Sperrluft für die Wälzlager kombiniert werden kann. Hierzu durchtritt die Sperrluft - als Lagerluft - bevorzugt zunächst den Luftkanal der Wälzlager. Hieran anschließend wird sie weiter nach oben geführt, so dass der Sperrluftkanal sich bis oberhalb des oberen Endes der Spannzange erstreckt.

Bevorzugt ist dabei die Ausgestaltung so gewählt, dass ein Ringspalt zwischen einem Spindelgelenk und dem Werkzeug oder der Spindel entsteht, der einen vergleichsweise hohen Strömungswiderstand hat und dementsprechend den Überdruckraum schafft.

Dieser Ringspalt kann mit einer axial gerichteten Austrittsfläche realisiert sein, mit einer schräg zur Werkzeugachse gerichteten oder mit einer radialen oder leicht schräg nach vorwärts gewandten Austrittsfläche.

In vorteilhafter Ausgestaltung der Erfindung ist es vorgesehen, dass der Luftkanal als Sperrluftkanal ausgebildet ist und mindestens teilweise oberhalb der Spannbacken einen Überdruckraum bildet.

In vorteilhafter Ausgestaltung der Erfindung ist es vorgesehen, dass der Überdruckraum in einem Ringspalt endet oder stromab des Überdruckraums ein Ringspalt angeordnet ist, dessen eine Spaltseite von dem Werkzeug oder der Spannzange gebildet ist.

In vorteilhafter Ausgestaltung der Erfindung ist es vorgesehen, dass ein Ringspalt stromab des Überdruckraums ein Spaltmaß zwischen 0,03 mm und 0,5 mm aufweist und insbesondere zwischen 0,08 und 0,15 mm.

In vorteilhafter Ausgestaltung der Erfindung ist es vorgesehen, dass ein Ringspalt stromab des Überdruckraums eine zur Werkzeugachse koaxiale Ausrichtung oder eine Ausrichtung hat, die höchstens um +/- 30° von der Achse der Werkzeugspindel abweicht.

In vorteilhafter Ausgestaltung der Erfindung ist es vorgesehen, dass das Werkzeug mindestens einen Ringsteg aufweist, der nach radial auswärts vorspringt, und dass der Sperrluftkanal an dem Ringsteg endet.

In vorteilhafter Ausgestaltung der Erfindung ist es vorgesehen, dass der Sperrluftkanal stromauf des Überdruckraums als Lagerluftkanal ausgebildet ist.

In vorteilhafter Ausgestaltung der Erfindung ist es vorgesehen, dass die Spannzange mit einer Druckluftquelle versehen ist der zum Öffnen der Spannbacken von hinten über eine Druckplatte auf diese wirkt und insbesondere dass die Druckluftquelle über ein Druckminderventil den Sperrluftkanal speist.

Die Realisierung einer radialen Austrittsfläche ist besonders dann vorteilhaft, wenn das Werkzeug mit einem Ringsteg versehen ist. Ein solcher Ringsteg ist typischerweise bei modernen Drehschleifmaschinen ohnehin vorgesehen und dient dazu, das Werkzeug für den Werkzeugwechsel leicht an einer Greifgabel handhaben zu können.

Der Ringsteg deckt den Ringspalt gleichsam ab.

Es ist auch möglich, dass das Werkzeug mehrere Ringstege axial hintereinander aufweist, die von Ringnuten getrennt sind.

Beispielsweise können 3 Ringstege und 2 Ringnuten vorsehen sein, und die Ringstege können axial unterschiedlich weit vorspringen.

In diesem Falle ist es günstig, wenn der Ringspalt an dem Ringsteg mit dem größten Durchmesser ausgebildet ist.

Es versteht sich, dass die erfindungsgemäßen Wirkungen besonders günstig bei einer Werkzeugmaschine mit senkrecht stehender Werkzeugspindel zur Geltung kommen. Grundsätzlich ist die Realisierung der Zusatzsperrluft für die Werkzeugspindel auch dann günstig, wenn eine liegende Werkzeugspindel zum Einsatz gelangt, da aufgrund der Verwirbelungen durch die Bewegung und die Luftströmungen im Fräsraum auch dann die Gefahr besteht, dass die Spannzange durch Ablagerung verunreinigt wird.

Unter senkrecht stehender Werkzeugspindel ist hier eine solche Anordnung zu verstehen, bei der das Werkzeug sich oben befindet, und in die Spannzange von oben nach unten eingeführt wird, um dort eingespannt zu werden.

Erfindungsgemäß ist das Gehäuse der Werkzeugspindel unter Schaffung des Überdruckraums im Vergleich zum Stand der Technik weiter nach oben gezogen. Es endet also nicht knapp oberhalb des obersten Wälzlagers, sondern wenige cm oder etwa 1 cm oberhalb an der Stelle, an der der Ringsteg des Werkzeugs vorgesehen ist, unter Bildung des Ringspalts.

Der Überdruckraum erstreckt sich insofern zwischen dem Lagerluftkanal und den erfindungsgemäß angeordneten Ringspalt.

Das Gehäuse der Werkzeugspindel ist typischerweise nach oben hin konisch zulaufend. Günstig ist es, wenn der Konus beim Stand der Technik kurzerhand nach oben fortgesetzt wird, so dass das Gehäuse der Werkzeugspindel oben zudem schlanker ist.

Dennoch verbleibt ausreichend Platz, um eine Düsenplatte für Luftdüsen bereitzustellen, die sich radial außerhalb des Ringspalts auf einer Fläche erstrecken, deren Normale achsparallel ist. Die an sich bekannten Luftdüsen enden bevorzugt weiter oben.

Dies hat den zusätzlichen Vorteil, dass der Austritt des Strömungsmediums, also Luft oder Wasser, durch diese Reinigungsdüsen näher an den Bearbeitungsbereich herangerückt ist, so dass dort eine bessere und gezieltere Reinigung möglich ist.

Weitere Vorteile, Einzelheiten und Merkmale ergeben sich aus der nachfolgenden Beschreibung mehrerer Ausführungsbeispiele der Erfindung anhand der Zeichnung.

Es zeigen :
- Fig. 1: ein Teil einer Werkzeugmaschine, gemäß dem Stand der Technik, unter Darstellung eines Teils der Werkzeugspindel und des Werkzeugs, in perspektivischer Darstellung;
- Fig. 2: ein Schnitt durch den entsprechenden Teil einer erfindungsgemäßen Werkzeugmaschine, unter Darstellung der Werkzeugspindel in ihrem oberen Teil, einschließlich des Werkzeugs;
- Fig. 3: eine weitere Ansicht entsprechend Fig. 2; und
- Fig. 4: eine schematische Skizze einer modifizierten Ausführungsform der erfindungsgemäßen Werkzeugmaschine, unter Darstellung eines anders ange-ordneten Ringspalts.

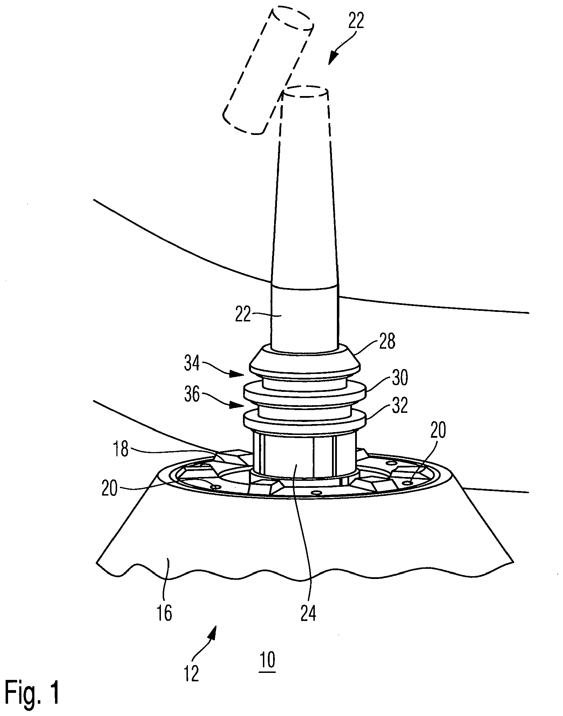

Fig. 1 ist eine Werkzeugmaschine 10 nach dem Stand der Technik auszugsweise dargestellt. Die Werkzeugmaschine 10 weist eine Werkzeugspindel 12 auf, die ein Werkzeug 14 trägt und eingespannt hält.

Die Werkzeugspindel 12 weist ein Spindelgehäuse 16 auf, das kegelstumpfförmig ausgebildet ist und an einer Düsenplatte 18 endet. Die Düsenplatte 18 weist eine Mehrzahl von Düsen 20 auf, die zur Reinigung eines Bearbeitungsbereich 22 gedacht sind.

Im Bearbeitungsbereich 22 hat das Werkzeug 14 Kontakt mit einem nicht dargestellten Werkstücks, so dass dort Späne oder Fräsmehl entstehen, die durch die Düsen 20 entfernt werden sollen.

Die Späne oder das Fräsmehl lagen sich spätestens bei Abschaltung der Druckluft aus den Düsen 20 ab.

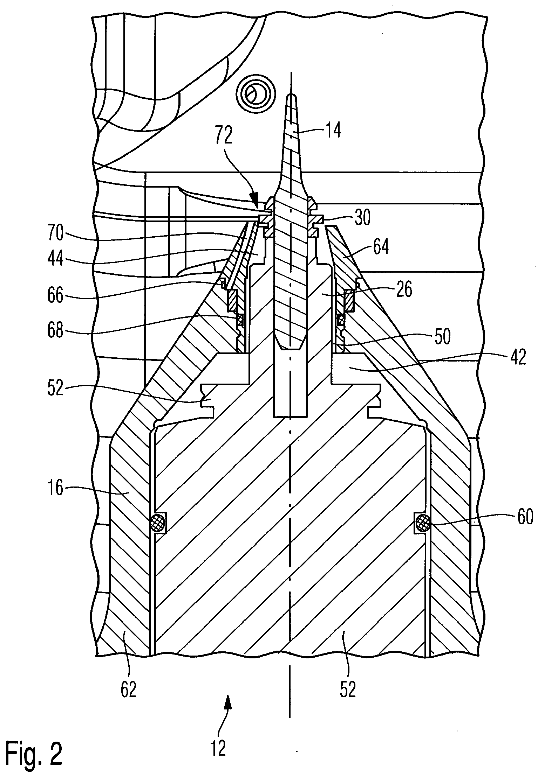

Das Werkzeug 14 hat einen Schaft 24, der in einer in Fig. 1 nicht dargestellten Spannzange 26, vergleiche Fig. 2, 3 und 4, eingespannt gehalten ist.

Im dargestellten Ausführungsbeispiel weist das Werkzeug 14 drei Ringstege 28, 30 und 32 auf, zwischen denen sich Ringnuten 34 und 36 erstrecken. Die Ringnuten 34 und 36 dienen der Aufnahme des Werkzeugs 14 in einer Greifgabel eines nicht dargestellten Roboterarmes und damit dem Werkzeugwechsel.

Bei dieser Lösung gemäß dem Stand der Technik, wie sie in Fig. 1 dargestellt ist, sollen Ablagerungen durch gehäuseseitig zusätzlich vorgesehene Luftdüsen beim Betrieb der Werkzeugmaschine 10 aufgewirbelt werden. Diese werden über eine bodenseitige Absaugung mindestens teilweise entfernt.

Wenn die Werkzeugmaschine 10 jedoch abgeschaltet wird, wird auch die Versorgung der Luftdüsen, unter anderem der Düsen 20, abgeschaltet, und damit können sich das entstehende Fräsmehl und die zugehörigen Späne ablagern.

Die Ablagerung erfolgt unter anderem auch auf und neben der Düsenplatte 18. Es war bislang nicht zu vermeiden, dass auch Ablagerungen ins Innere der Werkzeugspindel 12 gelangen.

Nachdem die Werkzeugmaschine 10 mit einer Drehschleifmaschine von mehr als 30.000 U/min arbeitet, ist die Realisierung eines Dichtrings nicht möglich, denn ein solcher würde bei Drehzahlen oberhalb von 5000 U/min umgehend verschleißen.

Erfindungsgemäß ist nun folgendes vorgesehen:
Das Gehäuse 16 der Spindel ist weiter nach oben gezogen und endet an einem Ringspalt 40. Der Ringspalt 40 ist die Mündung eines Sperrluftkanals 42 und erstreckt sich stromab und insbesondere zugleich oberhalb eines Überdruckraumes 44.

Der Überdruckraum 44 ist seinerseits mindestens teilweise oberhalb von Spannbacken 46 der Spannzange 26 angeordnet.

Damit kann Sperrluft durch den Sperrluftkanal 42 dergestalt austreten, dass keine Ablagerungen in dem Bereich der Spannbacken 46 gelangen können.

Der Strömungsquerschnitt des Ringspalts 40 ist erheblich keiner als derjenige des Überdruckraums 44 und auch etwas kleiner als der Strömungsquerschnitt des Lagerluftkanals 50, an welcher Stelle der Sperrluftkanal 42 die nicht dargestellten Wälzlager für die Lagerung der Spindel 12 an dem Gehäuse 16 aufnimmt.

Die erfindungsgemäße Lösung ist in Fig. 2 dargestellt.

Aus Fig 2 ist auch ersichtlich, dass zur Spindel 12 ein Spindelmotor 50 gehört. Dieser treibt die Spannzange 26 und damit das Werkzeug 14 an und ist für die hohe Umdrehungszahl geeignet.

Der Spindelmotor 50 ist zudem mit einer Schwungscheibe 52 drehfest verbunden, die auch zum Ausgleich von Unwuchten dient und entsprechend angepasst werden kann.

Seitlich des Spindelmotors 50 zum Gehäuse 16 der Spindel 12 hin ist eine Dichtung 60 vorgesehen.

Der Sperrluftkanal 42 ist mit Druckluft aus einer Druckluftquelle versorgt, in der Größenordnung von 2 bar, wobei die Druckluftquelle und die Versorgung an sich nicht im einzelnen dargestellt sind.

In dem dargestellten Ausführungsbeispiel ist zudem das Gehäuse 16 der Spindel zweiteilig ausgebildet. Das Gehäuse 16 umfasst ein Hauptgehäuse 62 und einen Gehäuseeinsatz 64, der im vorderen Bereich des konusförmigen Gehäuses 16 in das Hauptgehäuse 62 eingesetzt ist. Auch hier sind Dichtungen 66 und 68 vorgesehen.

Ferner ist aus Fig. 2 eine Düsenleitung 70 ersichtlich, die in der Düse 62 mündet. Die Düse 62 entspricht der Düse 20 gemäß Fig. 1, liegt jedoch auf einer deutlich höheren Ebene, so dass der Düsenkanal 70 ebenfalls verlängert ist.

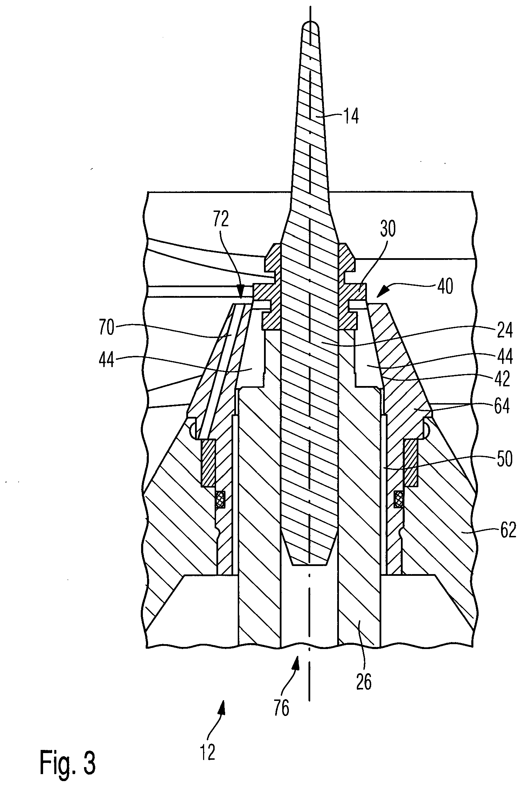

Aus Fig. 3 ist eine gegenüber Fig. 2 geänderte Ausführungsform in einer anderen Ansicht und vergrößert ersichtlich. Gleiche Bezugszeichen weisen hier wie auch in den weiteren Figuren auf gleiche Teile hin die Ausführungsform etwas geändert.

Es ist ersichtlich, dass das Werkzeug 14 in einer Werkzeugaufnahme 76 in der Spannzange 26 gehalten ist. Gerade dieser Bereich, in dem das Werkzeug 14 radial eingespannt gehalten ist, ist erfindungsgemäß durch die Sperrluft geschützt, so dass eine sichere und zentrierte Einspannung des Werkzeugs 14 an seinem Schaft 24 verschmutzungsfrei möglich ist.

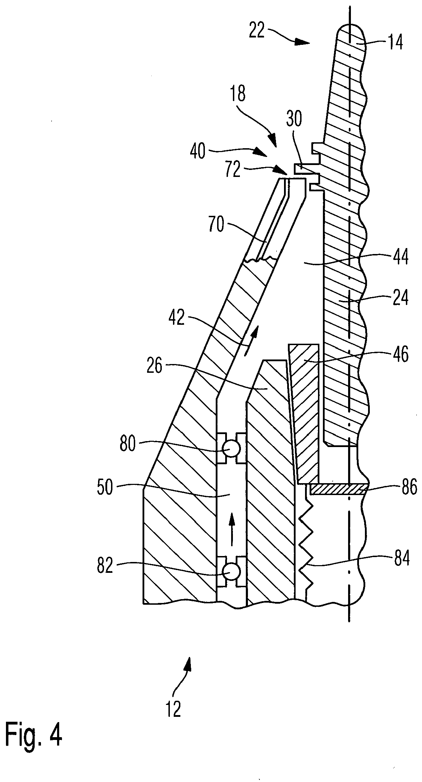

Eine weitere modifizierte Ausgestaltung der erfindungsgemäßen Werkzeugmaschine 10 ist aus Fig. 4 ersichtlich. Bei dieser Lösung ist der Ringspalt 40 nach radial gerichtet. Auch bei stillstehender Maschine kann eine vertikal sich absetzende Ablagerung nicht in den Ringspalt 40 geraten. Der Ringspalt 40 besteht wiederum zwischen den Ringsteg 30 und dem Gehäuse 16 der Werkzeugspindel 12.

Radial außerhalb des Ringspalts 40 ist eine Düsenplatte 18 ausgebildet, wobei eine Düse 72 mit einem Düsenkanal 70 dargestellt sind.

Aus Fig. 4 ist auch ersichtlich, das sich der Überdruckraum 44 deutlich oberhalb der Spannzange 26 erstreckt. Die Spannzange 26 umfasst Spannbacken 46, von denen wiederum eine Spannbacke 46 in Fig. 4 dargestellt ist.

Der Sperrluftkanal 42 umfasst neben dem Überdruckraum 44 auch den Lagerluftkanal 50. An dieser axialen Stelle sind Wälzlager vorgesehen, von denen zwei Wälzlager 80 und 82 aus Fig. 4 ersichtlich sind. Beide Wälzlager 80 und 82 werden in an sich bekannter Weise von der Lagerluft durchströmt, die ihrerseits als Sperrluft durch den Überdruckraum 44 hindurchströmt und am Ringspalt 40 austritt.

Fig. 4 ist auch ersichtlich, das die Spannbacken 46 eine schräg konische Außenfläche aufweisen. Diese wirken mit einer entsprechenden Fläche an der Spannzange 26 zusammen.

Durch eine Zugfeder 84 wird die Spannbacke 46 in axialer Richtung nach hinten gezogen, so dass sie das Werkzeug 14 an seinem Schaft 24 eingespannt hält.

Wenn die Spannbacke 46 über eine Druckplatte 86 nach vorne, also in der Darstellung gemäß Fig. 4 nach oben gedrückt wird, ist das Werkzeug 14 freigegeben und kann gewechselt werden.

Durch die von Druckluft betätigte Druckplatte 86 lässt sich die Spannbacke 26 anheben, so dass dort die dortige Abdichtung aufgegeben ist und Druckluft an dem Werkzeug 14 entlang strömt und auch in den Überdruckraum 44 eintritt.

Hierdurch ist gewährleistet, dass nicht Ablagerungen in den Bereich der Werkzeugaufnahme gelangen können.

## Patentansprüche

1. Werkzeugmaschine, insbesondere Drehschleifmaschine, mit einer Werkzeugspindel mit einer Spannzange und einem Spindelmotor, wobei die Spannzange mindestens zwei Spannbacken aufweist, die für die Aufnahme und für die Freigabe eines Werkzeugs betätigbar sind, und mit einem Luftkanal, der insbesondere radial außerhalb der Spannzange verläuft, **dadurch gekennzeichnet, dass** der Luftkanal als Sperrluftkanal (42) ausgebildet ist und mindestens teilweise oberhalb der Spannbacken (46) einen Überdruckraum (44) bildet.

2. Werkzeugmaschine nach Anspruch 1, **dadurch gekennzeichnet, dass** der Überdruckraum (44) in einem Ringspalt (40) endet oder stromab des Überdruckraums ein Ringspalt (40) angeordnet ist, dessen eine Spaltseite von dem Werkzeug (14) oder der Werkzeugspindel (12) gebildet ist.

3. Werkzeugmaschine nach einem der vorherigen Ansprüche, **dadurch gekennzeichnet, dass** ein Ringspalt (40) stromab des Überdruckraums (44) ein Spaltmaß zwischen 0,03 mm und 0,5 mm aufweist und insbesondere zwischen 0,08 und 0,15 mm.

4. Werkzeugmaschine nach einem der vorherigen Ansprüche, **dadurch gekennzeichnet, dass** ein Ringspalt (40) stromab des Überdruckraums (44) eine zur Werkzeugachse koaxiale Ausrichtung oder eine Ausrichtung hat, die höchstens um +/- 30° von der Achse der Werkzeugspindel (12) abweicht.

5. Werkzeugmaschine nach einem der vorherigen Ansprüche, **dadurch gekennzeichnet, dass** das Werkzeug (14) mindestens einen Ringsteg (28, 30, 32) aufweist, der nach radial auswärts vorspringt, und dass der Sperrluftkanal (42) an dem Ringsteg (30) endet.

6. Werkzeugmaschine nach einem der vorherigen Ansprüche, **dadurch gekennzeichnet, dass** der Sperrluftkanal (42) stromauf des Überdruckraums (44) als Lagerluftkanal (50) ausgebildet ist.

7. Werkzeugmaschine nach einem der vorherigen Ansprüche, **dadurch gekennzeichnet, dass** die Spannzange mit eine Druckluftquelle versehen ist, die zum Öffnen der Spannbacken (26) von hinten über eine Druckplatte (86) auf diese wirkt.

8. Werkzeugmaschine nach Anspruch 7, **dadurch gekennzeichnet, dass** die Druckluftquelle über ein Druckminderventil den Sperrluftkanal (42) speist.

9. Werkzeugmaschine nach einem der vorherigen Ansprüche, **dadurch gekennzeichnet, dass** der Sperrluftkanal (42) mit einem Überdruck zwischen 0,5 bar und 4 bar gespeist ist und ein Strömungsvolumen zwischen 5 Litern pro Minute und 50 Litern pro Minute, insbesondere zwischen 10 bis 20 Litern pro Minute hat.

10. Werkzeugmaschine nach einem der vorherigen Ansprüche, **dadurch gekennzeichnet, dass** ein Druckluftquelle bei geöffneter Spannzange ein Luftimpuls von insbesondere mehr als 6 bar an der Spannzange und dem Werkzeug (14) entlang abgebbar ist, unter Reinigung der Spannzange von Spänen.

11. Werkzeugmaschine nach einem der Ansprüche 2 bis 10, **dadurch gekennzeichnet, dass** der insbesondere von einem Ringsteg (28, 30, 32) abgedeckte und/oder begrenzte Ringspalt (40) eine radiale Ausrichtung hat oder eine Ausrichtung, die von der radialen Ausrichtung zwischen -5 und 30° nach vorne, bezogen auf die Werkzeugspindel (12), abweicht.

12. Werkzeugmaschine nach einem der Ansprüche 2 bis 10, **dadurch gekennzeichnet, dass** der Ringspalt (40) eine axiale Ausrichtung hat, oder eine Ausrichtung, die von der axialen Ausrichtung um maximal -5 und 30°, bezogen auf die Werkzeugspindel, (12) abweicht.

13. Werkzeugmaschine nach einem der vorherigen Ansprüche, **dadurch gekennzeichnet, dass** eine Mehrzahl von Düsen um das Werkzeug (14) verteilt an der Werkzeugspindel (12) angebracht sind, die mindestens teilweise auf einen Bearbeitungsbereich (22) zwischen Werkzeug (14) und Werkstück gerichtet sind und insbesondere in einer Düsenplatte vorgesehen sind, die sich kreisringförmig erstreckt.

14. Werkzeugmaschine nach Anspruch 13, **dadurch gekennzeichnet, dass** die Düsenplatte radial außerhalb des Ringspalt (40) angeordnet ist und insbesondere den Ringspalt (40) umgibt.

15. Werkzeugmaschine nach Anspruch 14, **dadurch gekennzeichnet, dass** rdie Düsenplatte im wesentlichen, insbesondere mit einer Abweichung in 2 von weniger als 5 mm, bevorzugt weniger als 2 mm, auf der gleichen axialen Höhe wie der Ringspalt (40) angeordnet ist.
